# FASCICULE DE BREVET EUROPEEN

(11) **EP 4 275 387 B1**
(45) Date de publication et mention de la délivrance du brevet: **29.01.2025**
(21) Numéro de dépôt: 21836524.5
(22) Date de dépôt: 14.12.2021
(51) Int. Cl.: H04W 28/16, H04W 72/04

(54) **PROCÉDÉ ET PASSERELLE D'ALLOCATION OPTIMISÉE DE STATIONS UTILISANT UN STANDARD 802.11AX**
VERFAHREN UND GATEWAY ZUR OPTIMIERTEN ZUWEISUNG VON STATIONEN MITTELS EINES 802.11AX-STANDARDS
METHOD AND GATEWAY FOR OPTIMISED ALLOCATION OF STATIONS USING AN 802.11AX STANDARD

(30) Priorité: 08.01.2021 FR 2100150
(43) Date de publication de la demande: 15.11.2023
(73) Titulaire: Softathome, 92700 Colombes (FR)
(72) Inventeur: FERABOLI, Quentin, 92000 Nanterre (FR)
(74) Mandataire: IPAZ
(86) Numéro de dépôt international: PCT/EP2021/085666
(87) Numéro de publication internationale: WO 2022/148613

(56) Documents cités:
- EP-A1- 3 058 772
- EP-B1- 3 058 772
- WO-A1-2017/160745

## Description

### Domaine technique

La présente invention concerne un procédé d'allocation optimisée de stations utilisant un standard 802.11ax dans un réseau local. Elle concerne également une passerelle domestique ainsi qu'un programme d'ordinateur d'allocation optimisée de stations dans un réseau local.

Un tel dispositif permet de planifier l'utilisation des bandes de fréquences d'un réseau local en prenant en compte plusieurs paramètres.

### Etat de la technique antérieure

La complexité des réseaux domestiques grandit rapidement en matière de topologie et de services fournis. D'une part, la topologie du réseau local domestique évolue d'une topologie en étoile classique autour de la passerelle domestique à une topologie en arbre ou maillée plus complexe du fait qu'il y ait de plus en plus d'équipements connectés via des technologies de connectivité variées et hétérogènes. En plus de la prolifération des équipements des utilisateurs, les équipements d'infrastructure du réseau domestique comme les commutateurs réseau Ethernet, les adaptateurs et les répéteurs Wi-Fi, etc. sont utilisés afin d'obtenir une couverture totale de la maison. D'autre part, le réseau domestique fournit des services variés qui sont en concurrence avec de multiples applications web du client ce qui conduit potentiellement à des problèmes de qualité de service. En outre, seuls quelques appareils du réseau domestique comme la passerelle domestique sont contrôlés par le Fournisseur d'Accès Internet (FAI), ce qui rend l'opération de gestion et de suivi plus délicate pour l'opérateur.

Dans un foyer, le point accès se comporte de manière identique et neutre pour allouer les bandes de fréquences aux différentes stations de la maison quelles que soient les applications utilisées.

On connaît de l'état de l'art des procédés pour prioriser certains équipements par rapport à d'autres.

Par exemple, le document EP 2 945 332 B1 divulgue un procédé d'allocation de bande passante réseau entre deux ou plusieurs utilisations sensiblement hétérogènes. Le procédé comprend : la fourniture de la bande passante disponible ; allouer une première partie de la bande passante disponible à la première utilisation ; et allouer une seconde partie de la bande passante disponible à la seconde utilisation.

De plus, des mécanismes existent comme le « Wi-Fi Multimedia (WMM) » qui permet aux réseaux Wi-Fi de prioriser le trafic généré par différentes applications ou le « Wi-Fi Multimédia Admission Control » qui permet aux réseaux Wi-Fi de gérer le trafic réseau en fonction de l'état du canal, la charge de trafic réseau et le type de trafic. Il est clair que ces mécanismes fonctionnent de manière unitaire sur les technologies 802.11n et 11ac. Mais ces mécanismes manquent de précision et leur exploitation paraient difficile lorsqu'il s'agit de prioriser de manière relative une station de jeux qui fait de la vidéo avec un téléviseur sur lequel on exploite un jeu vidéo.

On voit donc qu'avec certains services qui ne peuvent souffrir d'aucun défaut comme le jeu en ligne, il est souvent difficile d'obtenir un niveau de satisfaction élevé. A moins de dédier le point d'accès à une seule utilisation critique, les utilisateurs n'ont pas de choix ni de solution efficace.

Le but de la présente invention est de mettre à disposition des solutions permettant d'améliorer les débits. Un autre but de la présente invention est de réaliser une exploitation plus optimale de l'espace des fréquences.

### Exposé de l'invention

On atteint au moins un but de l'invention avec un procédé d'allocation optimisée de stations utilisant un standard 802.11ax dans un réseau local, ce réseau local comprenant au moins une station 802.11ax mettant en œuvre un service, une passerelle pour communiquer avec un réseau externe et un dispositif de détection permettant de détecter le type de service utilisé par la station, ce procédé comprenant les étapes suivantes :
- collecte des paramètres des stations,
- classement des services de chaque station dans N classes, chaque classe contenant au moins un type de service ; à chaque classe est affectés une unité de ressources et un nombre maximum de stations,
- rangement des N classes de façon ordonnée en fonction de la taille de l'unité de ressources affectée à chaque classe ;
- lorsqu'une station se connecte au réseau local :
   - identification d'une classe, dite classe dédiée, correspondant au service mis en œuvre par la station, identification d'une classe supérieure, par exemple directement supérieure, à la classe dédiée si cette classe supérieure existe, et d'une classe inférieure, par exemple directement inférieure, à la classe dédiée si cette classe inférieure existe,
   - vérification si le nombre maximum de stations est atteint dans la classe supérieure, dans la classe dédiée, ou dans la classe inférieure ; affectation de la station à l'unité de ressources de la première classe, dans l'ordre supérieure, dédiée puis inférieure, n'ayant pas atteint le nombre maximum de stations ; pas d'affectation si le nombre maximum est atteint dans les trois classes.

Ce procédé permet de planifier l'utilisation de la bande de fréquences (affectation des unités de ressources) en prenant en compte plusieurs données supplémentaires qui sont : le type de la station (stations de jeux, tablettes, smartphones, caméras), le type d'application ou service utilisé par la station (consultation web, jeu, vidéo, navigation) et la topologie du réseau (répéteurs, bande de fréquences utilisée) permettant une exploitation plus optimale de l'espace des fréquences.

En effet, une topologie du réseau local peut être prise en compte pour l'affectation des stations aux différentes unités de ressources.

L'invention se sert intelligemment des possibilités données par le standard 802.11ax, notamment à travers la mise en œuvre du OFDMA, pour mieux utiliser la bande passante et mieux répartir la ressource entre les différentes stations.

Le procédé optimise cette affectation des stations aux unités de ressources pour améliorer les performances en terme de débit et de latence. L'utilisateur du réseau obtient satisfaction sans qu'il ait à comprendre ou à intervenir sur la technique, la configuration et/ou la topologie mise en place.

Avantageusement la passerelle domestique peut calculer la classe de la station de manière dynamique. La classe de la station est calculée à partir du type de service utilisé par la station. Calculer la classe de la station de manière dynamique permet d'augmenter la réactivité du procédé mais également de s'adapter au mieux au service utilisé par la station lors de son utilisation.

Les paramètres des stations collectés peuvent être au moins :
- la marque,
- le modèle,
- la version du système d'exploitation.

Chaque unité de ressources peut correspondre à une bande passante de tailles différentes. Avantageusement, chaque unité de ressources peut également correspondre à une bande passante maximum, la station peut utiliser totalement ou non l'unité de ressources selon le service qu'elle utilise.

La passerelle peut être pilotée localement afin de modifier les paramètres des classes. La station peut effectuer un changement de configuration en cours de fonctionnement. La passerelle peut également attribuer un nombre restreint de stations par classe ou désactiver des classes. On entend par « piloter localement », le fait que les actions de la passerelle peuvent être faites sur la passerelle localement par un technicien intervenant directement sur la passerelle domestique chez le client. On entend également par « piloter localement », la mise en œuvre d'actions commandées par une unité de traitement interne de la passerelle domestique.

La passerelle peut être pilotée en ligne de manière dynamique afin de modifier les paramètres des classes. On entend par « manière dynamique », le fait qu'en cours de fonctionnement, la passerelle domestique peut prendre un ensemble de décisions concernant les stations, leurs classes et leurs affectations d'unités de ressources. On entend également par « manière dynamique », le fait que la passerelle domestique soit pilotée à distance par le service client opérateur par exemple.

Par conséquent, un service client opérateur peut, à distance ou en envoyant un technicien chez le client, configurer une classe spécifique pour une station afin de répondre à une insatisfaction du client.

Il est possible d'envisager un pilotage local et un pilotage en ligne de façon complémentaire, agissant en parallèle ou l'un après l'autre, en fonction du temps, en fonction des ressources disponibles dans la passerelle ou autre.

L'affectation des stations aux unités de ressources peut être périodique, la période ayant une fréquence configurable comprise entre 1 et 10 secondes. L'affectation périodique permet au procédé d'avoir le temps d'évaluer l'impact de l'affectation et par conséquent, d'éviter trop de changements d'unité de ressources pour les stations. Avantageusement, la période peut être égale à 10 secondes.

L'affectation des stations aux unités de ressources peut être mise à jour à chaque évènement et/ou à chaque changement de service de la station, ce qui permet une affectation optimale des stations aux différentes unités de ressources durant chaque période.

Une station de la famille des répéteurs peut être affectée à une classe fixe lors de sa connexion sur le réseau local.

Un répéteur est un dispositif permettant d'étendre la couverture du réseau local en transmettant le signal de la passerelle qu'il reçoit aux stations connectées sur celui-ci. Ainsi avec une affectation fixe lors de la connexion du répéteur au réseau selon l'invention, cela permet de réduire la latence et augmenter la robustesse du lien des stations Wi-Fi connectées au répéteur. Selon un deuxième aspect de l'invention, il est proposé une passerelle pour optimiser l'allocation de stations dans un réseau local, la passerelle étant équipée d'une unité de traitement pour mettre en œuvre les étapes du procédé.

Selon un troisième aspect de l'invention, il est proposé un produit programme d'ordinateur comprenant des instructions qui, lorsque le programme est exécuté par un ordinateur, conduisent celui-ci à mettre en œuvre les étapes du procédé.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
[Fig.1] illustre un réseau local domestique sans fil selon l'invention,
[Fig.2] illustre un ordinogramme du procédé d'allocation optimisée des stations selon l'invention,
[Fig.3] illustre un ordinogramme de l'algorithme d'affectation selon l'invention,
[Fig.4] illustre une répartition homogène des stations sur un réseau local,
[Fig.5] illustre une répartition optimisée des stations sur le réseau local selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

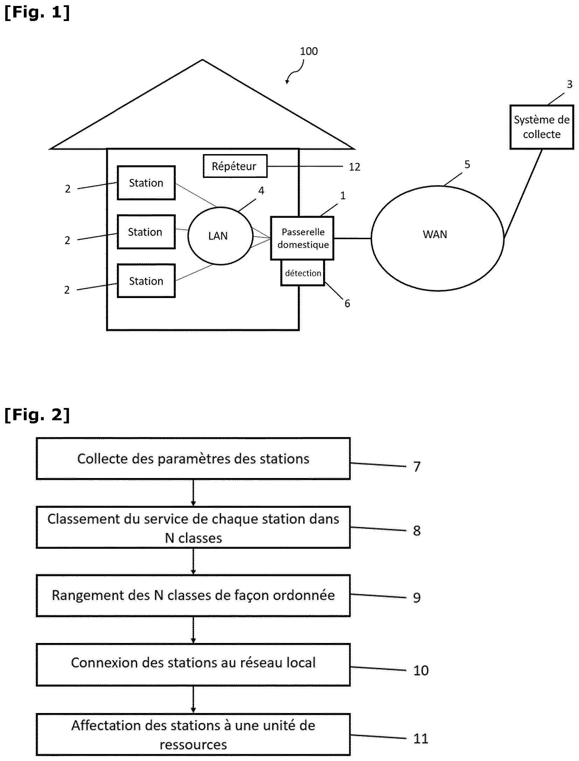

On va tout d'abord décrire, en référence à la [Fig.1], un réseau local domestique sans fil 100. Le centre du réseau est une passerelle domestique 1 distribuant une connexion internet aux différentes stations 2 connectées dans le domicile. La passerelle domestique 1 est placée dans le domicile, comme dans le salon par exemple. La passerelle domestique 1 est le point central de tous les flux : images, musique, vidéos etc. Chaque station 2 est reliée sans fil en Wi-Fi ou par un câble Ethernet à la passerelle domestique 1. Les stations 2 utilisent un standard 802.11ax dans le réseau local 100. La passerelle domestique 1 est connectée, d'un coté au réseau local 4, en anglais « Local Area Network » ou LAN du domicile et de l'autre côté, au réseau externe 5, en anglais « Wide Area Network » ou WAN. Le réseau local 4 désigne toute installation informatique interconnecté ou station 2 au sein du domicile de l'utilisateur comme par exemple, une télévision, une tablette, un téléphone portable ou encore une console de jeux. Le réseau externe 5 est connecté à un système de collecte 3 distant. Le réseau local domestique sans fil 100 comprend également un répéteur Wi-Fi 12.

On va à présent décrire, un procédé d'allocation optimisée de stations 2 utilisant un standard 802.11ax dans le réseau local 100. D'après la [Fig.1], le réseau local 100 comprend trois stations 2 utilisant un standard 802.11ax, chaque station 2 mettant en œuvre un service. La passerelle domestique 1 est équipée d'un dispositif de détection 6 permettant de détecter le type de service utilisé par la station 2 comme le jeu en ligne, les vidéos, l'internet, l'audio ou l'utilisation d'une caméra par exemple et d'un dispositif de détection de stations (non représenté sur la [Fig.1]). La passerelle 1 comprend la configuration et la topologie du réseau local 100.

De manière générale, il y a un point d'accès principal, la passerelle domestique 1 et plusieurs points d'accès secondaires comme des répéteurs Wi-Fi 12 par exemple. Dans le cas de plusieurs répéteurs 12 connectés en cascade par exemple, ils utilisent la même unité de ressources.

D'après la [Fig.2], le procédé comprend les étapes suivantes :
- collecte 7 des paramètres des stations 2,
- classement 8 des services de chaque station 2 dans N classes,
- rangement 9 des N classes de façon ordonnée,
- connexion 10 de la station 2 au réseau local 4,
- affectation 11 de la station 2 à une unité de ressources.

Cette configuration de procédé est mise en place lorsque les stations 2 sont déjà connues par la passerelle domestique 1, c'est-à-dire que les stations 2 se sont déjà connectées à la passerelle domestique 1. Par conséquent, les paramètres des stations 2 concernées sont déjà enregistrés dans la passerelle domestique 1.

Dans le cas où les stations ne se sont jamais connectées au réseau local 4, le procédé comprend les mêmes étapes mais dans l'ordre suivant :
- connexion 10 de la station 2 au réseau local 4,
- collecte 7 des paramètres des stations 2,
- classement 8 des services de chaque station 2 dans N classes,
- rangement 9 des N classes de façon ordonnée,
- affectation 11 de la station 2 à une unité de ressources.

Les paramètres des stations 2 comme la marque, le modèle, le logiciel ou la version du système d'exploitation par exemple sont collectés par la passerelle domestique 1. Les paramètres collectés lors de la première connexion de la station 2 au réseau local 4 sont enregistrés dans la passerelle 1. Les services utilisés par les stations 2 sont détectés par le dispositif de détection 6 puis sont classés dans N classes. Chaque classe contient au moins un type de service. La classe de la station 2 est calculée à partir du service utilisé de la station 2. A chaque classe est affectés une unité de ressources et un nombre maximum de stations 2. Les N classes sont rangées en fonction de la taille de l'unité de ressources qui leur est affectée. Prenons comme exemple qu'il y ait six types de services détectés. A chaque service est affecté une classe, par conséquent six classes sont définies. A chaque classe est affectée une unité de ressources de tailles différentes. La classe six, soit la classe la plus basse, est affectée d'une unité de ressources de 2 MHz tandis que la classe 1, soit la classe la plus haute est affectée d'une unité de ressources de 80 MHz. Les classes sont donc ordonnées comme présentées dans le tableau suivant :

| Classes | UR (MHz) | Nb max de stations |
|---|---|---|
| 1 | 80 | 2 |
| 2 | 40 | 4 |
| 3 | 20 | 8 |
| 4 | 8 | 16 |
| 5 | 4 | 32 |
| 6 | 2 | 64 |

Les paramètres tels que : le nombre de classes, les unités de ressources ou le nombre de stations 2 maximum par classe sont gérés par le système de collecte distant 3 de manière dynamique.

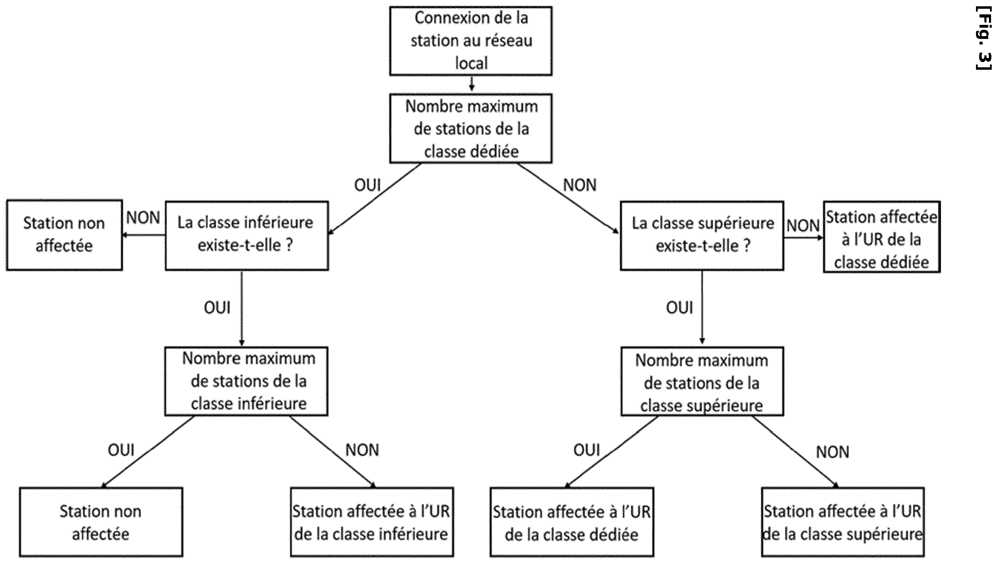

Un algorithme d'affectation affecte les stations 2 aux unités de ressources d'une première classe lorsqu'elles se connectent au réseau local 4 selon l'ordinogramme présenté à la [Fig.3]. Une classe correspondant au service mis en œuvre par la station 2 est identifiée par l'algorithme, il s'agit de la classe dédiée. L'algorithme vérifie également si une classe directement supérieure et une classe directement inférieure à la classe dédiée existent.

Par exemple, selon le tableau 1, si la classe dédiée est la classe quatre, la classe directement supérieure correspond à la classe trois et la classe directement inférieure correspond à la classe cinq. Une classe supérieure à la classe dédiée possède une unité de ressources plus grande que celle de la classe dédiée. Une classe inférieure à la classe dédiée possède une unité de ressources plus petite que celle de la classe dédiée.

D'après la [Fig.3], l'algorithme commence par vérifier le nombre maximum de stations 2 de la classe dédiée. Si le nombre maximum de stations 2 de la classe dédiée n'est pas atteint, l'algorithme vérifie qu'une classe directement supérieure existe. Dans le cas où il n'existe pas de classe directement supérieure, la station 2 est affectée à l'unité de ressources de la classe dédiée. Dans le cas où il existe une classe directement supérieure à la classe dédiée, l'algorithme vérifie le nombre maximum de stations 2 de la classe supérieure. Si le nombre maximum de stations de la classe supérieure est atteint, la station 2 est affectée à l'unité de ressources de la classe dédiée, dans le cas contraire, si le nombre maximum de stations 2 de la classe supérieure n'est pas atteint, la station 2 est affectée à l'unité de ressources de la classe supérieure. L'affectation d'une station 2 à l'unité de ressources de la classe directement supérieure est une option configurable. L'option est activée par défaut afin de "remplir" l'ensemble des unités de ressources de manière optimale. Dans le cas où l'option n'est pas activée, la station 2 est affectée à la classe dédiée et non à la classe supérieure. L'option est désactivée uniquement si l'utilisateur en fait la demande auprès du service client opérateur. La désactivation est réalisée soit localement par un technicien sur la passerelle domestique 1, soit de manière dynamique, c'est-à-dire à distance par le service client opérateur.

Si le nombre maximum de stations 2 de la classe dédiée est atteint, l'algorithme vérifie qu'une classe directement inférieure existe. Dans le cas où il n'existe pas de classe directement inférieure, la station 2 n'est affectée à aucune unité de ressources. Dans le cas où la station 2 n'est affectée à aucune unité de ressources, la station 2 sort de l'algorithme et l'envoi des données se fait donc séquentiellement. Dans le cas où il existe une classe directement inférieure à la classe dédiée, l'algorithme vérifie le nombre maximum de stations 2 de la classe inférieure. Si le nombre maximum de stations 2 de la classe inférieure est atteint, la station n'est affectée à aucune unité de ressources, dans le cas contraire, si le nombre maximum de stations 2 de la classe inférieure n'est pas atteint, la station 2 est affectée à l'unité de ressources de la classe inférieure.

Si le nombre maximum de stations 2 d'une classe est atteint, cela signifie qu'il n'y a plus de place pour cette unité de ressources ainsi que pour les unités de ressources supérieures.

De plus, une première station 2 qui a été affectée à l'unité de ressources de la classe supérieure ne reste dans cette classe supérieure que durant la période en cours. En effet, si une deuxième station 2 de cette classe supérieure doit être affectée à l'unité de ressources correspondante et que le nombre maximum de stations 2 de cette classe supérieure est atteint, alors à la prochaine période, la première station 2 est réaffectée à l'unité de ressources de sa classe dédiée. Par conséquent, une priorité d'affectation est mise en place afin de gérer l'allocation des stations 12 aux unités de ressources de manière optimale et permettre à chaque station 12 d'être affectée à l'unité de ressources lui correspondant le mieux selon le service que la station utilise.

L'affectation est réévaluée périodiquement, elle est mise à jour toutes les 1 à 10 secondes. L'affectation est également réévaluée lorsqu'un évènement se produit comme : une entrée ou sortie de station 2, un changement de canal, à chaque changement de service d'une station 2 ou « steering ». On entend par « steering », la fonction d'un logiciel permettant de demander à une station 2 de changer de point d'accès Wi-Fi. La fonction « steering » est par exemple gérée par la passerelle domestique 1.

Il y a des exceptions à cette affectation. Les répéteurs Wi-Fi 12 ou certaines stations 2 particulières comme un décodeur de télévision par exemple ne sont pas concernées par ce classement et sont affectées à une unité de ressources fixe tout au long de leur utilisation sur le réseau local 4.

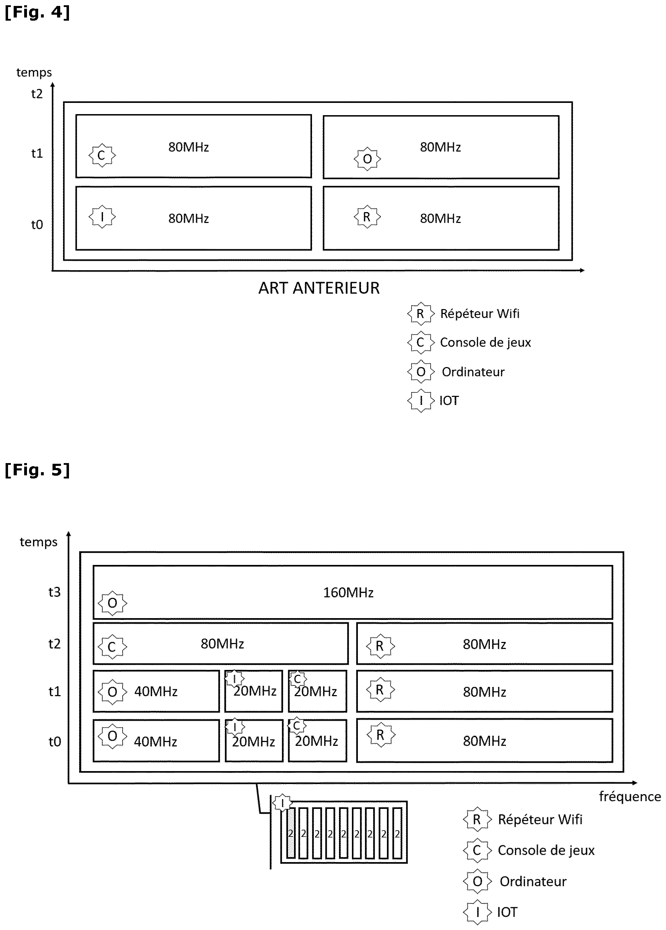

D'après les figures 4 et 5, quatre stations 2 appartenant à quatre classes différentes sont connectées au réseaux local 4 : un répéteur Wi-Fi 12, un ordinateur, une console de jeux et un IOT (« Internet Of Things ») comme une station Alexa par exemple. Dans l'exemple des figures 4 et 5, sept classes sont définies comme dans le tableau suivant :

| Classes | UR (MHz) | Nb max de stations |
|---|---|---|
| 1 | 160 | 1 |
| 2 | 80 | 2 |
| 3 | 40 | 4 |
| 4 | 20 | 8 |
| 5 | 8 | 16 |
| 6 | 4 | 32 |
| 7 | 2 | 64 |

Dans le cas de la [Fig.4], la passerelle domestique 1 se comporte comme présenté dans l'état de l'art, c'est-à-dire de manière identique et neutre pour allouer les unités de ressources aux stations 2 de la maison quelles que soient les applications ou services utilisés. En l'absence de planification optimisée, la répartition des stations 2 se fait donc de manière homogène. Des surutilisations des unités de ressources sont constatées en t0, ce qui augmentent la latence pour les stations 2 qui veulent transmettre leurs données uniquement en t1.

En appliquant la planification optimale selon l'invention, la répartition des stations 2 par la passerelle domestique 1 est réalisée comme présenté à la [Fig.5]. A la première période t0, l'ordinateur transmet peu de données. L'ordinateur est affecté à la classe trois soit à l'unité de ressources de 40 MHz (voir tableau 2). L'équipement IOT est affecté à la classe sept soit à l'unité de ressources de 2 MHz. La console de jeux est affectée à la classe quatre soit à l'unité de ressources de 20 MHz et le répéteur Wi-Fi 12 à la classe deux, soit à une unité de ressources de 80 MHz, le répéteur Wi-Fi 12 nécessitant une bande passante élevée.

A la période t1, le nombre de stations 2 associées à la classe sept étant trop faible pour remplir les neuf places de 2MHz disponibles, la station IOT est automatiquement surclassée vers l'unité de ressources de la classe cinq de 20MHz afin d'éviter d'avoir des fréquences non utilisées. La station IOT à la possibilité d'être surclassée car le nombre maximum de stations 2 de la classe cinq n'est pas atteint.

A la période t2, un changement de service sur la console de jeux est détecté par la passerelle domestique 1 ce qui modifie sa classe et donc la taille de l'unité de ressources à laquelle la console est affectée. La console de jeux est donc surclassée dans la classe deux correspondant à une unité de ressources de 80 MHz. A la période t3, la passerelle domestique 1 détecte que l'ordinateur change de service. L'ordinateur est donc affecté à une nouvelle classe correspondant au nouveau service utilisé. La nouvelle classe de l'ordinateur est la classe un qui correspond à l'unité de ressources de 160 MHz.

On constate que le répéteur Wi-Fi 12 est isolé et reste dans sa classe tout au long de son utilisation, réduisant la latence et augmentant la robustesse du lien pour les stations Wi-Fi connectées à celui-ci. Un répéteur Wi-FI 12 ou station particulière est prioritaire.

L'ensemble des stations 2 ont transmis leurs données en t0 sans impact utilisateur car les ressources allouées sont adaptées aux types de stations et de services. En adoptant ce type de planification fréquentielle par stations 2 et par services, l'usage des unités de ressources mises à disposition est optimisé.

Dans le cas où une station 2 n'est affectée à aucune unité de ressources, la station 2 sort de l'algorithme et l'envoi des données se fait séquentiellement. Dans le cas d'une affectation séquentielle, la taille de l'unité de ressources dépend des capacités maximums de la station 2 et n'est pas déterminée par l'algorithme selon l'invention.

L'envoi séquentielle se traduit par exemple par l'envoi des données en t1 pour les stations priorisées tel qu'un répéteur 12 par exemple (envoi des données au même instant de temps en t0 ou t1 ou t2), l'envoi des données en t2 pour une station non priorisée en standard 802.11ax.

Typiquement au moins un des moyens du dispositif selon l'invention précédemment décrit, de préférence chacun des moyens du dispositif selon l'invention précédemment décrit sont des moyens techniques.

Typiquement, chacun des moyens du dispositif selon l'invention précédemment décrits peuvent comprendre au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé mise en œuvre par une passerelle (1) d'allocation optimisée de stations utilisant un standard 802.11ax dans un réseau local (100), ce réseau local (100) comprenant au moins une station 802.11ax mettant en œuvre un service, la passerelle (1) pour communiquer avec un réseau externe (5) et un dispositif de détection (6) permettant de détecter le type de service utilisé par la station, ce procédé comprenant les étapes suivantes :
- collecte (7) des paramètres des stations (2),
- classement (8) des services de chaque station (2) dans N classes, chaque classe contenant au moins un type de service ; à chaque classe est affectés une unité de ressources et un nombre maximum de stations,
- rangement (9) des N classes de façon ordonnée en fonction de la taille de l'unité de ressources affectée à chaque classe ;
- lorsqu'une station (2) se connecte au réseau local (100) :
- identification d'une classe, dite classe dédiée, correspondant au service mis en œuvre par la station (2), identification d'une classe supérieure à la classe dédiée si cette classe supérieure existe, et d'une classe inférieure à la classe dédiée si cette classe inférieure existe,
- vérification si le nombre maximum de stations (2) est atteint dans la classe supérieure, dans la classe dédiée, ou dans la classe inférieure ; affectation (11) de la station (2) à l'unité de ressources de la première classe, dans l'ordre supérieure, dédiée puis inférieure, n'ayant pas atteint le nombre maximum de stations (2) ; pas d'affectation si le nombre maximum est atteint dans les trois classes.

2. Procédé d'allocation optimisée de stations selon l'une quelconque des revendications précédentes, dans lequel la passerelle domestique (1) calcule la classe de la station (2) de manière dynamique.

3. Procédé d'allocation optimisée de stations selon l'une quelconque des revendications précédentes, dans lequel les paramètres des stations (2) collectés sont au moins :
- la marque,
- le modèle,
- la version du système d'exploitation.

4. Procédé d'allocation optimisée de stations selon l'une quelconque des revendications précédentes, dans lequel chaque unité de ressources correspond à une bande passante de tailles différentes.

5. Procédé d'allocation optimisée de stations selon l'une quelconque des revendications précédentes, dans lequel la passerelle (1) est pilotée localement afin de modifier les paramètres des classes.

6. Procédé d'allocation optimisée de stations selon l'une quelconque des revendications précédentes, dans lequel la passerelle (1) est pilotée en ligne de manière dynamique afin de modifier les paramètres des classes.

7. Procédé d'allocation optimisée de stations selon l'une quelconque des revendications précédentes, dans lequel l'affectation (11) des stations (2) aux unités de ressources est périodique, la période ayant une fréquence configurable comprise entre 1 et 10 secondes.

8. Procédé d'allocation optimisée de stations selon l'une quelconque des revendications précédentes, dans lequel l'affectation (11) des stations (2) aux unités de ressources est mise à jour à chaque évènement.

9. Procédé d'allocation optimisée de stations selon l'une quelconque des revendications précédentes, dans lequel l'affectation (11) des stations (2) aux unités de ressources est mise à jour à chaque changement de service de la station (2).

10. Procédé d'allocation optimisée de stations selon l'une quelconque des revendications précédentes, dans lequel une station (2) de la famille des répéteurs est affectée à une classe fixe lors de sa connexion sur le réseau local (100).

11. Procédé d'allocation optimisée de stations selon l'une quelconque des revendications précédentes, dans lequel une topologie du réseau local (100) est prise en compte pour l'affectation des stations (2) aux différentes unités de ressources.

12. Passerelle pour optimiser l'allocation de stations dans un réseau local, la passerelle 1 étant équipée d'une unité de traitement pour mettre en œuvre les étapes du procédé selon l'une quelconque des revendications 1 à 11.

13. Produit programme d'ordinateur comprenant des instructions qui, lorsque le programme est exécuté par un ordinateur associé à une passerelle conduisent la passerelle à mettre en œuvre les étapes du procédé selon l'une quelconque des revendications 1 à 11.

## Patentansprüche

1. Durch ein Gateway (1) implementiertes Verfahren für optimiertes Zuordnen von Stationen unter Verwendung eines 802.11ax-Standards in einem lokalen Netzwerk (100), wobei dieses lokale Netzwerk (100) mindestens eine 802.11ax-Station umfasst, die einen Dienst implementiert, das Gateway (1) zum Kommunizieren mit einem externen Netzwerk (5) und eine Erkennungsvorrichtung (6), die es ermöglicht, die Art des durch die Station verwendeten Dienstes zu erkennen, wobei dieses Verfahren die folgenden Schritte umfasst:
- Erfassen (7) von Stationsparametern (2),
- Klassifizieren (8) von Diensten jeder Station (2) in N Klassen, wobei jede Klasse mindestens eine Dienstart enthält; jeder Klasse eine Ressourceneinheit und eine maximale Anzahl von Stationen zugewiesen wird,
- Ablegen (9) der N Klassen in geordneter Weise abhängig von der Größe der Ressourceneinheit, die jeder Klasse zugewiesen ist;
- wenn eine Station (2) sich mit dem lokalen Netzwerk (100) verbindet:
- Identifizieren einer Klasse, die als dedizierte Klasse bezeichnet wird, entsprechend dem durch die Station (2) implementierten Dienst, Identifizieren einer höheren Klasse als der dedizierten Klasse, falls diese höhere Klasse vorhanden ist, und einer niedrigeren Klasse als der dedizierten Klasse, falls diese niedrigere Klasse vorhanden ist,
- Überprüfen, ob die maximale Anzahl von Stationen (2) in der höheren Klasse, in der dedizierten Klasse oder in der niedrigeren Klasse erreicht ist; Zuweisen (11) der Station (2) zu der Ressourceneinheit der ersten Klasse, in der Reihenfolge höher, dediziert, dann niedriger, nachdem die maximale Anzahl von Stationen (2) nicht erreicht wurde; kein Zuteilen, falls in allen drei Klassen die maximale Anzahl erreicht wird.

2. Verfahren für optimiertes Zuordnen von Stationen nach einem der vorstehenden Ansprüche, wobei das Heim-Gateway (1) die Klasse der Station (2) dynamisch berechnet.

3. Verfahren für optimiertes Zuordnen von Stationen nach einem der vorstehenden Ansprüche, wobei die erfassten Parameter der Stationen (2) mindestens sind:
- die Marke,
- das Modell,
- die Version des Betriebssystems.

4. Verfahren für optimiertes Zuordnen von Stationen nach einem der vorstehenden Ansprüche, wobei jede Ressourceneinheit einer Bandbreite unterschiedlicher Größen entspricht.

5. Verfahren für optimiertes Zuordnen von Stationen nach einem der vorstehenden Ansprüche, wobei das Gateway (1) lokal gesteuert wird, um die Klassenparameter zu ändern.

6. Verfahren für optimiertes Zuordnen von Stationen nach einem der vorstehenden Ansprüche, wobei das Gateway (1) dynamisch online gesteuert wird, um die Klassenparameter zu ändern.

7. Verfahren für optimiertes Zuordnen von Stationen nach einem der vorstehenden Ansprüche, wobei das Zuweisen (11) der Stationen (2) zu den Ressourceneinheiten periodisch erfolgt, wobei die Periode eine konfigurierbare Häufigkeit zwischen 1 und 10 Sekunden besitzt.

8. Verfahren für optimiertes Zuordnen von Stationen nach einem der vorstehenden Ansprüche, wobei das Zuweisen (11) der Stationen (2) zu den Ressourceneinheiten bei jedem Ereignis aktualisiert wird.

9. Verfahren für optimiertes Zuordnen von Stationen nach einem der vorstehenden Ansprüche, wobei das Zuweisen (11) der Stationen (2) zu den Ressourceneinheiten bei jedem Dienstwechsel der Station (2) aktualisiert wird.

10. Verfahren für optimiertes Zuordnen von Stationen nach einem der vorstehenden Ansprüche, wobei eine Station (2) der Transponderfamilie während seiner Verbindung mit dem lokalen Netzwerk (100) einer festen Klasse zugewiesen wird.

11. Verfahren für optimiertes Zuordnen von Stationen nach einem der vorstehenden Ansprüche, wobei eine Topologie des lokalen Netzwerks (100) für das Zuweisen von Stationen (2) zu den unterschiedlichen Ressourceneinheiten berücksichtigt wird.

12. Gateway für optimierte Zuordnung von Stationen in einem lokalen Netzwerk, wobei das Gateway 1 mit einer Verarbeitungseinheit zum Implementieren der Schritte des Verfahrens nach einem der Ansprüche 1 bis 11 ausgestattet ist.

13. Computerprogrammprodukt, umfassend Anweisungen, die, wenn das Programm durch einen Computer, der mit einem Gateway verknüpft ist, ausgeführt wird, das Gateway dazu veranlassen, die Schritte des Verfahrens nach einem der Ansprüche 1 bis 11 zu implementieren.

## Claims

1. Method implemented by a gateway (1) for optimized allocation of stations using an 802.11ax standard in a local network (100), said local network (100) comprising at least one 802.11ax station implementing a service, the gateway (1) for communicating with an external network (5) and a detection device (6) making it possible to detect the type of service used by the station, said method comprising the following steps:
- collecting (7) the parameters of the stations (2);
- classifying (8) the services of each station (2) into N classes, each class containing at least one type of service; each class is assigned a resource unit and a maximum number of stations;
- arranging (9) the N classes in an ordered manner as a function of the size of the resource unit assigned to each class;
- when a station (2) connects to the local network (100):
- identifying a class, referred to as dedicated class, corresponding to the service implemented by the station (2), identifying a higher class than the dedicated class if this higher class exists, and a lower class than the dedicated class if this lower class exists;
- checking if the maximum number of stations (2) is reached in the higher class, in the dedicated class, or in the lower class; assigning (11) the station (2) to the resource unit of the first class, in the order higher, dedicated then lower, not having reached the maximum number of stations (2); and not assigning if the maximum number is reached in the three classes.

2. Method for optimized allocation of stations according to any one of the preceding claims, in which the home gateway (1) dynamically calculates the class of the station (2).

3. Method for optimized allocation of stations according to any one of the preceding claims, in which the collected parameters of the stations (2) are at least:
- the brand;
- the model;
- the version of the operating system.

4. Method for optimized allocation of stations according to any one of the preceding claims, in which each resource unit corresponds to a passband of different sizes.

5. Method for optimized allocation of stations according to any one of the preceding claims, in which the gateway (1) is locally controlled so as to modify the parameters of the classes.

6. Method for optimized allocation of stations according to any one of the preceding claims, in which the gateway (1) is dynamically controlled online so as to modify the parameters of the classes.

7. Method for optimized allocation of stations according to any one of the preceding claims, in which the assignment (11) of the stations (2) to the resource units is periodic, the period having a configurable frequency comprised between 1 and 10 seconds.

8. Method for optimized allocation of stations according to any one of the preceding claims, in which the assignment (11) of the stations (2) to the resource units is updated at each event.

9. Method for optimized allocation of stations according to any one of the preceding claims, in which the assignment (11) of the stations (2) to the resource units is updated at each change of service of the station (2).

10. Method for optimized allocation of stations according to any one of the preceding claims, in which a station (2) of the family of the repeaters is assigned to a fixed class during its connection to the local network (100).

11. Method for optimized allocation of stations according to any one of the preceding claims, in which a topology of the local network (100) is taken into account for the assignment of the stations (2) to the different resource units.

12. Gateway for optimizing the allocation of stations in a local network, the gateway (1) being equipped with a processing unit in order to implement the steps of the method according to any one of claims 1 to 11.

13. Computer program product comprising instructions which, when the program is executed by a computer associated to a gateway, lead the gateway to implement the steps of the method according to any one of claims 1 to 11.
